# EUROPEAN PATENT APPLICATION

(11) **EP 4 653 118 A1**
(43) Date of publication of application: **26.11.2025**
(21) Application number: 25174690.5
(22) Date of filing: 07.05.2025
(51) Int. Cl.: B23K 9/133, B23K 9/32

(54) **WIRE FEEDING SYSTEMS WITH BUILT-IN ROTATING POWER CONNECTORS**

(30) Priority: 15.05.2024 US 202463647959 P; 29.04.2025 US 202519192583
(71) Applicant: Illinois Tool Works Inc., Glenview IL 60025 (US)
(72) Inventor: CENTNER, Robert Joseph, Glenview, IL 60025 (US)
(74) Representative: HGF

(57) **Abstract**

An example welding-type system includes a wire feeder for providing electrode wire to a welding torch comprising one or more drive rolls configured to retract or advance the electrode wire; a rotating power connector comprising an outer portion with a hollow bore; and an inner sleeve within the hollow bore, wherein the inner sleeve is configured to receive a power pin of the welding torch in alignment with the one or more drive rolls, conduct electrical power to the power pin, and permit the power pin to rotate with respect to the outer portion, wherein the outer portion is fixed within the wire feeder.

## Description

### CROSS REFERENCE TO RELATED APPLICATIONS

This application is a Non-Provisional of U.S. Provisional Patent Application No. 61/647,959, entitled "Wire Feeding Systems With Built-In Rotating Power Connectors", filed May 15, 2024, which is herein incorporated by reference in its entirety.

### FIELD OF THE DISCLOSURE

This disclosure relates generally to electrode wire feeding systems and, more particularly, to electrode wire feeding systems with built-in rotating power connectors.

### BACKGROUND

Conventional wire feeding systems feed welding wire to a welding torch or robotic arm in order to perform welding. Typically, the welding wire is fed through a power cable that provides current, shielding gas, and electrode wire to the welding torch and includes two fixed connections: one end of the power cable is fastened to a wire feeder by way of a power pin, and the other end is fastened to the welding torch.

### SUMMARY

Electrode wire feeding systems with built-in rotating power connectors are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example welding-type system, in accordance with aspects of this disclosure.
FIG. 2 is a block diagram of an example rotating power connector of the example wire feeder of FIG. 1.
FIG. 3 is a cross-sectional side view of an example wire feeder of the example welding-type system of FIG. 1.
FIG. 4 is a perspective view of an example wire feeder of the example welding-type system of FIG. 1.

The figures are not necessarily to scale. Where appropriate, similar or identical reference numbers are used to refer to similar or identical components.

### DETAILED DESCRIPTION

For the purpose of promoting an understanding of the principles of this disclosure, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

This disclosure relates generally to electrode wire feeding systems and, more particularly, to electrode wire feeding systems with built-in rotating power connectors. In particular, example electrode wire feeding systems are disclosed that include rotating power connectors. Disclosed example wire feeding systems with built-in rotating power connectors are disclosed that provide a mechanical and electrical connection between the wire feeding system and a power pin attached to the welding power cable and allow for rotation of the power pin and the welding power cable relative to the wire feeder. Disclosed example wire feeding systems with built-in rotating power connectors provide welding power, shielding gas, and electrode welding wire via the rotating power connector to the welding torch.

During welding, as the welding torch is manipulated by a user or robot, the welding power cable may be twisted, stressed, and/or strained as the torch moves. Over time, this causes wear on the welding power cable and can cause failure of the cable. Additionally, the twisting and/or turning during the torch manipulation, may also cause stress and/or strain on a wire liner that runs from the power pin of the power welding cable through the welding torch. Furthermore, replacing welding power cables requires downtime and removing various connectors and components in order to replace the cables.

The present disclosure provides a wire feeding system with a built-in rotating power connector that receives a power pin of the welding torch. The present disclosure advantageously permits rotation of the power pin of the welding torch at the wire feeder in order to minimize twisting, stress, and strain on the welding power cable and the wire liner.

Disclosed example welding-type systems provide an electrode wire feeding systems with built-in rotating power connectors to receive a power pin from a welding torch. Additionally, disclosed example welding-type systems provide a wire feeding system that minimizes twisting of a welding power cable from a welding torch. Disclosed example welding-type systems provide a connector that delivers shielding gas, welding current, and electrode wire to a welding torch. Disclosed example welding-type systems allow for rotation of a power pin and welding power cable relative to the wire feeder. Disclosed example welding feeder systems minimize movement to the wire liner due to movement of the welding torch during a welding process.

As used herein, the word "exemplary" means "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

Disclosed example wire feeders for providing electrode wire to a welding torch include one or more drive rolls configured to retract or advance the electrode wire and a rotating power connector including an outer portion with a hollow bore and an inner sleeve within the hollow bore. In some examples, the inner sleeve is configured to receive a power pin of the welding torch in alignment with the one or more drive rolls, conduct electrical power to the power pin, and permit the power pin to rotate with respect to the outer portion, wherein the outer portion is fixed within the wire feeder.

In some example wire feeders, the power pin is configured to slide into and out of the inner sleeve. Some example wire feeders include one or more fasteners to secure the power pin within the inner sleeve. In some example wire feeders, the rotating power connector is further configured to deliver shielding gas through the power pin to the welding torch. In some example wire feeders, the rotating power connector comprises a current pathway from the wire feeder to the welding torch. In some example wire feeders, the one or more drive rolls are configured to advance or retract the electrode wire through the rotating power connector to the welding torch.

Example welding systems include a welding torch comprising a power pin and a wire feeder configured to provide electrode wire to the welding torch and including one or more drive rolls configured to retract or advance the electrode wire, and a rotating power connector between the one or more drive rolls and the power pin of the welding torch to provide an electrical connection from the wire feeder to the welding torch and including an outer portion with a hollow bore and an inner sleeve within the hollow bore, wherein the inner sleeve is configured to receive the power pin of the welding torch in alignment with the one or more drive rolls and permit the power pin to rotate with respect to the outer portion, and wherein the outer portion is fixed within the wire feeder.

Some example welding systems include a welding power cable connected between the power pin and the welding torch, wherein the welding power cable relieves strain at the wire feeder during welding. In some example welding systems, the one or more drive rolls are configured to advance or retract the electrode wire through the rotating power connector to the welding torch. In some example welding systems, the wire feeder comprises one or more fasteners to engage the power pin within the inner sleeve. In some example welding systems, a circumference of the outer portion of the rotating power connector is secured within the wire feeder. In some example welding systems, the power pin is configured to slide into and out of the inner sleeve. In some example welding systems, the rotating power connector is configured to deliver shielding gas through the power pin to the welding torch. In some example welding systems, the rotating power connector comprises a current pathway from the wire feeder to the welding torch.

As used herein, the terms "first" and "second" may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

FIG. 1 illustrates an example welding-type system 100. The example welding type system 100 of FIG. 1 includes a power supply 110 for delivery of welding power, a gas source 120 for delivery of shielding gas, and a welding wire feeder 130 for providing welding wire for certain types of welding. A welding torch 140, such as a gas tungsten arc welding (GTAW) torch, a wire-fed welding torch (e.g., a torch to perform gas metal arc welding (GMAW), flux cored arc welding (FCAW), etc.), a plasma cutting torch, a carbon arc cutting torch, a gouging torch, etc. may be connected to the wire feeder 130.

In some examples, the power supply 110 provides power to the wire feeder 130 in order to supply electrode wire to the welding torch 140 for various welding applications (e.g., GMAW welding, flux core arc welding (FCAW)). The power supply 110 receives the shielding gas from the gas source 120 and routes the shielding gas to the wire feeder 130 via cable 112. In some examples, the wire feeder 130 is part of the welding power supply 110 or is integrated into the welding power supply 110. The example welding torch 140 includes a torch head 142 and a torch body 144.

The power supply 110 includes a controller (not shown) to control the operation of the power supply 110. The controller may also include interface circuitry for communicating data to other devices in the system, such as the wire feeder 130 or other welding-type devices. For example, in some situations, the power supply 110 may wirelessly communicate with other welding devices within the welding system. Further, in some situations, the power supply 110 communicates with other welding devices using a wired connection, such as by using a network interface controller (NIC) to communicate data via a network (e.g., ETHERNET, 10baseT, 10base100, etc.).

The gas source 120 may provide shielding gas to the power supply 110. The power supply 110 provides welding power and shielding gas to the wire feeder 130. The wire feeder 130 receives welding power and shielding gas from the power supply 110, and then provides welding power, shielding gas, and electrode wire to the torch body 144 of the welding torch 140 for delivery to the torch head 142 via a welding power cable 150.

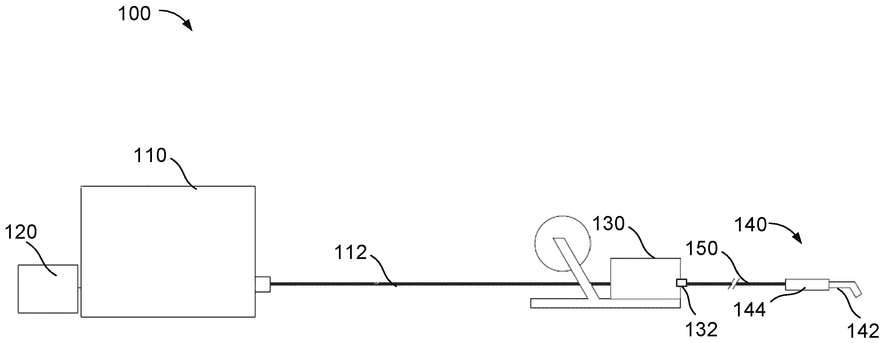

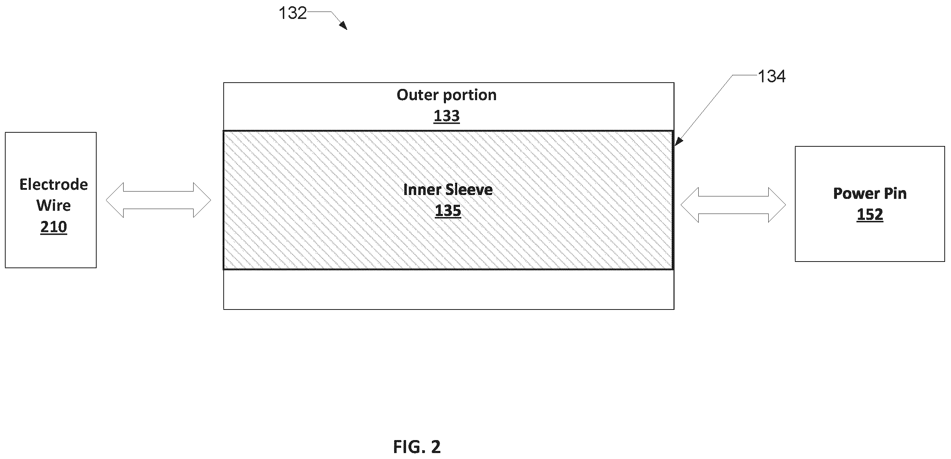

The rotating power connector 132 of the wire feeder 130 may provide shielding gas, electric current, and electrode wire to the welding torch 140. The rotating power connector 132 may be installed in an opening or outlet in the wire feeder 130. A power pin (not shown but described further below with regards to FIGs. 2-4) is attached to the welding power cable 150 of the welding torch 140 and may be inserted into the rotating power connector 132 to allow gas, electric current, and welding wire to be delivered through the welding power cable 150 to the welding torch 140.

In some examples, as the welding torch 140 is manipulated, movements of the welding torch 140 affect the stress and/or strain on the welding power cable 150. For example, the welding power cable 150 twists, turns, and/or bends based on the movement of the welding torch 140. The rotating power connector 132 installed in the wire feeder 130 allows the welding power cable 150 to turn at the wire feeder 130 so as to minimize twisting, turning, and/or bending of the welding power cable 150.

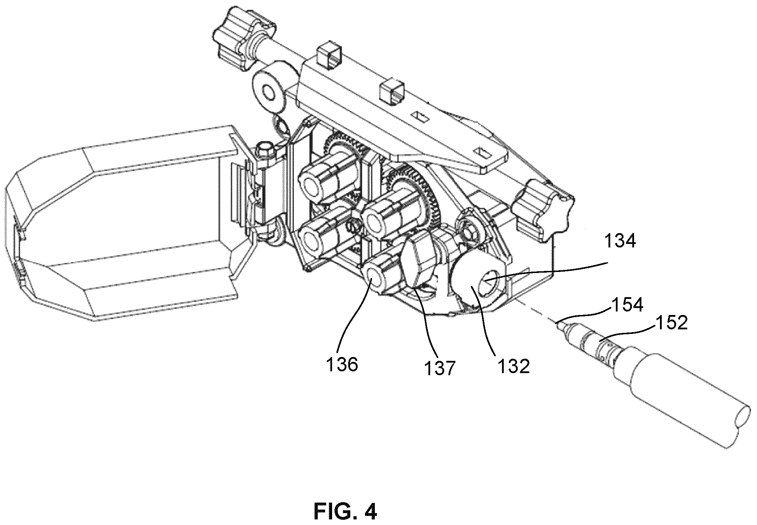

FIG. 2 is a block diagram of an example rotating power connector 132 of the example wire feeder of FIG. 1. The rotating power connector 132 includes an outer portion 133 with a hollow bore 134 (also described below with regards to FIG. 4). An inner sleeve 135 is positioned within the hollow bore 134 and receives electrode wire 210 at a first side and the power pin 152 attached to the welding power cable 150 (depicted in FIG. 1, for example) at a second side. The outer portion 133 is fixed within the wire feeder 130, and the inner sleeve 135 has the ability to rotate. Once the power pin 152 is inserted, the power pin 152 is fastened within the inner sleeve 135, which allows the power pin 152 to rotate relative to the wire feeder 130. The electrode wire 210 is inserted in the inner sleeve 135 at the end opposite the power pin 152. The electrode wire 210 may advance through the inner sleeve 135 of the rotating power connector 132 and into the power pin 152, which is connected to a welding power cable 150.

In some examples, the rotating power connector 132 is made of conductive material, such as brass or copper, as non-limiting examples. The outer portion 133 of the rotating power connector 132 may be built-in to the wire feeder 130 so that the outer portion 133 remains fixed. In some examples, the rotating power connector 132 may be coupled to the wire feeder 130 and/or affixed to other internal components of the wire feeder 130 so that the outer portion 133 does not move relative to the wire feeder 130. In some examples, a circumference of the outer portion 133 of the rotating power connector is secured to the wire feeder 130 and or other components of the wire feeder 130 in order to affix the rotating power connector to the wire feeder 130. In some examples, the inner sleeve 135 is fastened to the outer portion 133 and/or other parts of the wire feeder 130. For example, the inner sleeve 135 may be fastened to the outer portion 133 such that the inner sleeve 135 may rotate while the outer portion 133 remains fixed within the wire feeder 130. In some examples the outer portion 133 includes one or more electrical contacts arranged within the outer portion 133 and/or the inner sleeve 135 to provide an electrical connection between the outer portion 133 and the inner sleeve and/or between the inner sleeve 135 and the power pin 152.

The power pin 152 may be fastened to the inner sleeve 135 of the rotating power connector. In some examples, the power pin 152 is fastened using one or more of a clamp, clip, screw, nuts, bolts, rivets, pins, washers, etc. In some examples, one or more bearings (not shown) may be placed within the outer portion 133 and/or inner sleeve 135 in order to provide stability while allowing rotation of the inner sleeve 135 and/or the power pin 152.

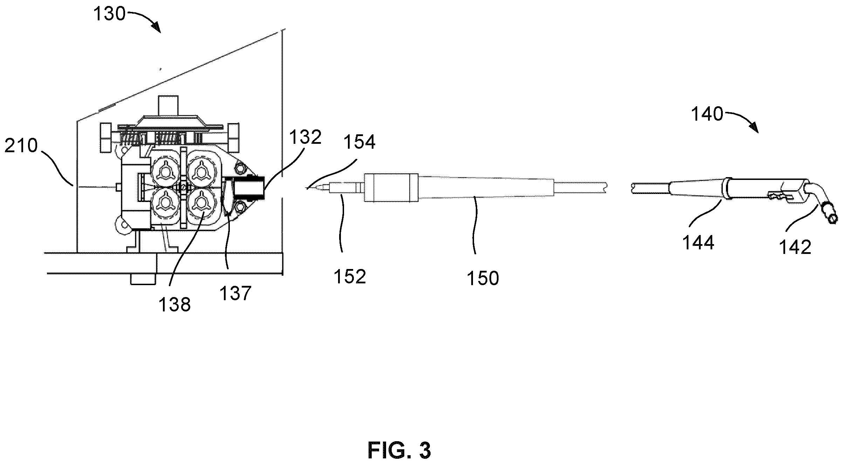

FIG. 3 is a cross-sectional side view of an example wire feeder of the example welding-type system of FIG. 1. FIG. 4 is a perspective view of an example wire feeder of the example welding-type system of FIG. 1. The wire feeder 130 includes a rotating power connector 132, a knob 137 for tightening a power pin 152 of the welding torch 140, and drive rolls 138 for advancing or retracting electrode wire towards and away from the welding torch 140. The rotating power connector 132 and the power pin 152 may be constructed of a conductive material such as copper and/or brass. The rotating power connector 132 is built into the wire feeder 130 and includes a hollow bore or aperture (as described above with regards to FIG. 2) to receive the power pin 152. The power pin 152 of the welding power cable 150 is positioned within the rotating power connector 132 and configured to couple the power pin 152 to the welding power cable 150.

At a first end of the wire feeder 130, electrode wire 210 inserted at the wire feeder 130 may be guided using a wire guide (not shown) to the drive roll(s) 138, and through the rotating power connector 132 and the power pin 152 to the torch head 142 of the welding torch. At the second end of the wire feeder, a wire liner 154 may be inserted into the power pin 152 of the welding torch 140 and run through a length of the welding power cable 150 and the welding torch 140. In some examples, the wire liner 154 is fixed at the power pin side of the welding power cable 150 and/or at the welding torch 140 end. A portion of the wire liner 154 may be external to the power pin 152 so that the wire liner 154 may receive the electrode wire 210 once the power pin 152 is inserted into the rotating power connector 132 within the wire feeder 130.

The power pin 152 with the wire liner 154 may be inserted into the inner sleeve 135 of the rotating power connector 132 of the wire feeder 130 as described above with regards to FIG. 2. The power pin 152 of the welding power cable 150 is configured to couple the rotating power connector 132 to the welding power cable 150 in order to deliver shielding gas, welding power, and electrode wire to the welding torch 140 and may be positioned within the inner sleeve of the rotating power connector 132. The power pin 152 has the ability to rotate within the rotating power connector 132. The power pin 152 is fastened to the inner sleeve 135 of the rotating power connector 132 in order to allow the power pin 152 to rotate with the inner sleeve 135, thus allowing any strain and/or tension in the welding power cable 150 to be released.

In some examples, the power pin 152 is inserted into the inner sleeve 135 of the power pin 152 and fastened using a clamping, gripping, securing, or locking mechanism in order to secure the power pin 152 to the rotating power connector 132. For example, the knob 137 may be used to tighten a wingnut clamping mechanism to secure the power pin 152 to the rotating power connector 132. In some other examples, the knob 137 may be used to tighten another type of securing mechanism to secure the power pin 152 to the rotating power connector 132 while allowing the power pin 152 to rotate with the inner sleeve 135. Once inserted, the wire liner 154 may receive the electrode wire 210 which may be advanced using the drive roll(s) through the rotating power connector 132, into the power pin 152 and to the welding torch 140 for use in welding.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A wire feeder for providing electrode wire to a welding torch comprising:
one or more drive rolls configured to retract or advance the electrode wire;
a rotating power connector comprising:
an outer portion with a hollow bore; and
an inner sleeve within the hollow bore, wherein the inner sleeve is configured to receive a power pin of the welding torch in alignment with the one or more drive rolls, conduct electrical power to the power pin, and permit the power pin to rotate with respect to the outer portion,
wherein the outer portion is fixed within the wire feeder.

2. The wire feeder of claim 1, wherein the power pin is configured to slide into and out of the inner sleeve.

3. The wire feeder of claim 1, further comprising one or more fasteners to secure the power pin within the inner sleeve.

4. The wire feeder of claim 1, wherein the rotating power connector is further configured to deliver shielding gas through the power pin to the welding torch.

5. The wire feeder of claim 1, wherein the rotating power connector comprises a current pathway from the wire feeder to the welding torch.

6. The wire feeder of claim 1, wherein the one or more drive rolls are configured to advance or retract the electrode wire through the rotating power connector to the welding torch.

7. A welding system comprising:
a welding torch comprising a power pin;
a wire feeder configured to provide electrode wire to the welding torch and comprising:
one or more drive rolls configured to retract or advance the electrode wire;
a rotating power connector between the one or more drive rolls and the power pin of the welding torch to provide an electrical connection from the wire feeder to the welding torch and comprising:
an outer portion with a hollow bore; and
an inner sleeve within the hollow bore, wherein the inner sleeve is configured to receive the power pin of the welding torch in alignment with the one or more drive rolls and permit the power pin to rotate with respect to the outer portion,
wherein the outer portion is fixed within the wire feeder.

8. The welding system of claim 7, further comprising a welding power cable connected between the power pin and the welding torch, wherein the welding power cable relieves strain at the wire feeder during welding.

9. The welding system of claim 7, wherein the one or more drive rolls are configured to advance or retract the electrode wire through the rotating power connector to the welding torch.

10. The welding system of claim 7, wherein the wire feeder comprises one or more fasteners to engage the power pin within the inner sleeve.

11. The welding system of claim 7, wherein a circumference of the outer portion of the rotating power connector is secured within the wire feeder.

12. The welding system of claim 7, wherein the power pin is configured to slide into and out of the inner sleeve.

13. The welding system of claim 7, wherein the rotating power connector is configured to deliver shielding gas through the power pin to the welding torch.

14. The welding system of claim 7, wherein the rotating power connector comprises a current pathway from the wire feeder to the welding torch.
